# EUROPEAN PATENT APPLICATION

(11) **EP 2 472 849 A1**
(43) Date of publication of application: **04.07.2012**
(21) Application number: 10811881.1
(22) Date of filing: 25.08.2010
(51) Int. Cl.: H04N 5/202, H04N 7/01

(54) **VIDEO SIGNAL PROCESSING DEVICE**

(30) Priority: 28.08.2009 JP 2009197913
(71) Applicant: JVC KENWOOD Corporation, Kanagawa 221-0022 (JP)
(72) Inventor: KOIZUMI, Maki, Yokohama-shi Kanagawa 221-8528 (JP); AIBA, Hideki, Yokohama-shi Kanagawa 221-8528 (JP); SHISHIDO, Tomoyuki, yokohama-shi Kanagawa 221-8528 (JP)
(74) Representative: Wimmer, Hubert
(86) International application number: PCT/JP2010/064331
(87) International publication number: WO 2011/024832

(57) **Abstract**

A motion vector detection unit 2 detects a motion vector necessary when generating interpolation pixel data. Data holding/selection unit 311, 312 selects pixel data within an actual frame to generate interpolation pixel data. An averaging unit 318 generates interpolation pixel data. An inverse gamma correction unit is arranged between the data holding/selection unit 311, 312 and the averaging unit 318 and a gamma correction unit 319 is arranged in the subsequent stage of the averaging unit 318.

## Description

### Technical Field

The present invention relates to a video signal processor that increases the number of frames by interpolating interpolation frames between actual frames of a video signal and then converts a frame rate (frame frequency) and, more particularly, to a video signal processor that performs both inverse gamma correction and gamma correction and then converts a frame rate.

### Background Art

When a motion picture is displayed on an image display unit using a liquid crystal panel, an afterimage tends to occur. In order to reduce an afterimage, an image is displayed after increasing the number of frames by interpolating interpolation frames between actual frames of a video signal and then converting a frame rate of, for example, a vertical frequency of 60 Hz into a vertical frequency of 120 Hz, twice the original frequency, or more. In a video signal processor that performs frame rate conversion, a motion vector of an image is detected, each interpolation pixel is generated using the motion vector, and an interpolation frame to be interpolated between actual frames is generated.

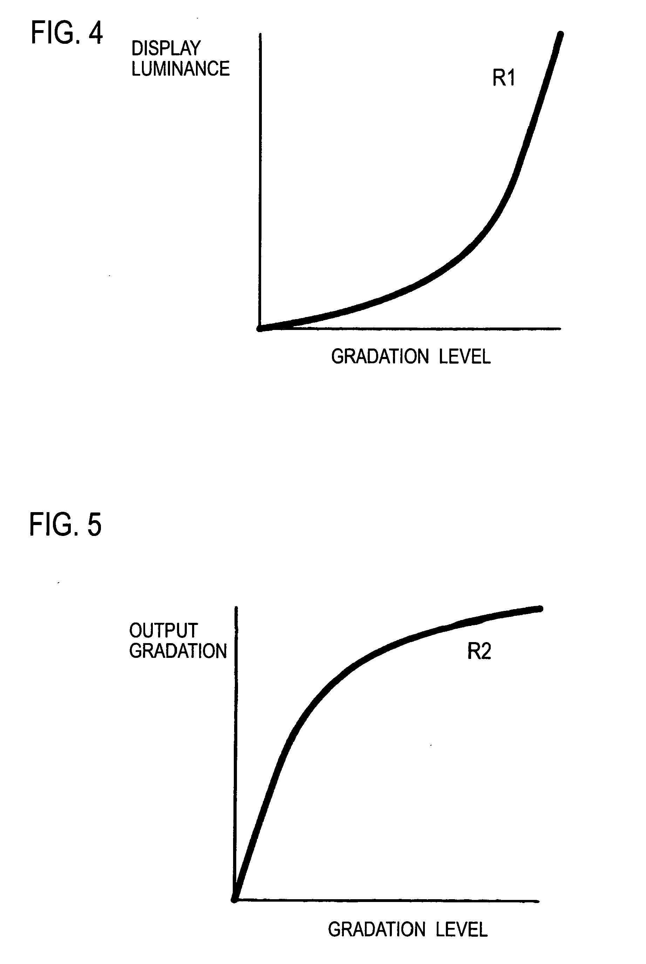

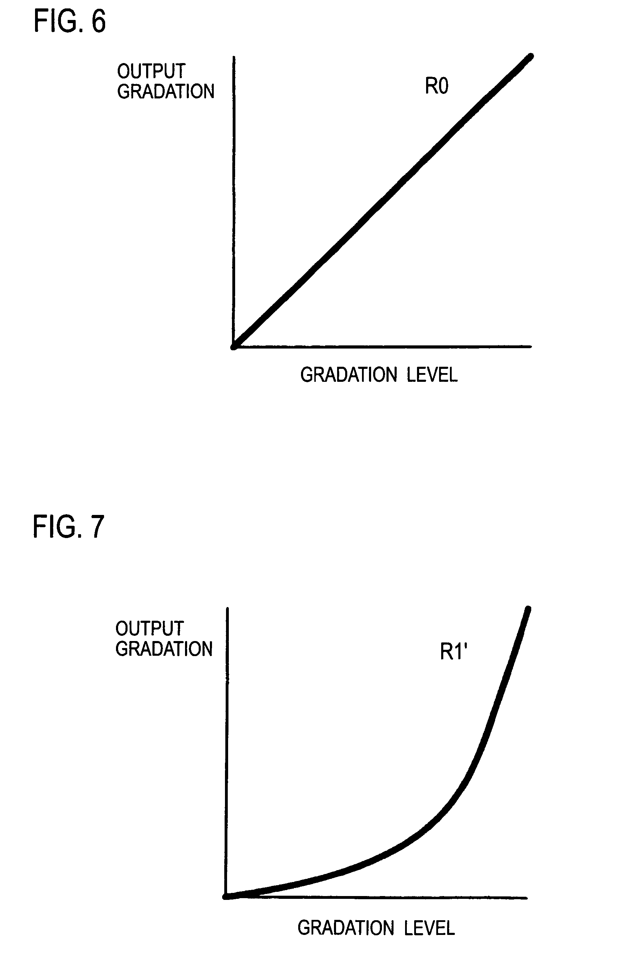

In a general image display device, the relation between gradation level and display luminance of an input signal has nonlinear characteristics R1 in a downwardly convex shape as shown in Fig. 4. Hence, a video signal of a television signal transmitted as a broadcast wave signal and a video signal recorded in a recording medium, such as an optical disc, are generated on the assumption that the image display device has the characteristics R1 shown in Fig. 4, and therefore, these video signals have been subjected to so-called gamma correction in advance so as to have nonlinear characteristics R2 in an upwardly convex shape as shown in Fig. 5. When a video signal processor performs predetermined processing on a video signal, it is advantageous for the video signal to have linear characteristics R0 as shown in Fig. 6. Therefore, an image display device comprises an inverse gamma correction unit configured to cause a video signal subjected to gamma correction to have linear characteristics and a gamma correction unit configured to perform gamma correction again in the previous stage of a display unit.

Patent Document 1 describes an image display device comprising an inverse gamma correction unit, a gamma correction unit, and a frame rate conversion circuit In the image display device described in Patent Document 1, the inverse gamma correction unit is provided in an input stage of the video signal processor, which is the previous stage of a video modulation unit corresponding to the frame rate conversion circuit, and the gamma correction unit is provided in an output stage of the video signal processor, which is the subsequent stage of the video modulation unit.

### Prior Art Literatures

### Patent Literatures

Patent Document 1: Japanese Patent Publication Laid-Open No. 2007-156412 (Fig. 15, Fig. 22)

### Summary of the Invention

### Problems to be Solved

Data obtained by performing inverse gamma correction on a video signal having been subjected to gamma correction requires high bit precision. This is because when inverse gamma correction is performed on a video signal having been subjected to gamma correction, data having the decimal point is obtained, and therefore, high bit precision is required to represent the fractional part. When inverse gamma correction is performed in the input stage as in the video signal processor described in Patent Document 1, it is necessary to perform signal processing with high bit precision in each unit within the video signal processor. Consequently, the circuit scale and the cost increase.

The present invention has been made in view of such problems and an object thereof is to provide a video signal processor capable of reducing the number of circuit parts that perform signal processing with high bit precision as small as possible and of suppressing an increase in circuit scale as small as possible.

### Solution to the Problems

In order to solve the problems of the prior art described above, the present invention provides a video signal processor characterized by comprising: a motion vector detection unit (2) configured to detect a motion vector necessary when generating interpolation pixel data to configure an interpolation frame to be interpolated between a plurality of actual frames using pixel data within the plurality of actual frames in an input video signal; a pixel data selection unit (311, 312, 321, 322, 331, 332) configured to select and output pixel data within the plurality of actual frames to generate the interpolation pixel data according to the motion vector; an interpolation pixel generation unit (318, 328, 338) configured to generate the interpolation pixel data using pixel data within the plurality of actual frames selected by the pixel data selection unit; an inverse gamma correction unit (314, 315, 324, 325, 334, 335) arranged between the pixel data selection unit and the interpolation pixel generation unit and configured to perform inverse gamma correction on pixel data output from the pixel data selection unit in order to correct the gamma characteristics given in advance to the input video signal; and a gamma correction unit (319, 329, 339) arranged in the subsequent stage of the interpolation pixel generation unit and configured to perform gamma correction on the interpolation pixel data output from the interpolation pixel generation unit.

In the above configuration, it may also be possible to provide an intermediate pixel generation unit (316, 317, 326, 327, 336, 337) configured to generate virtual interpolation pixel data located between two pixels neighboring on one line within an actual frame between the inverse gamma correction unit and the interpolation pixel generation unit and to cause the interpolation pixel generation unit to generate the interpolation pixel data using the virtual interpolation pixel data.

Further, it may also be possible to provide a shift amount conversion unit (313, 323, 333) configured to convert the motion vector into shift amounts for pixel data in the same horizontal and vertical positions as those of the interpolation pixel data within the plurality of actual frames and to cause the pixel data selection unit to select and output pixel data within the plurality of actual frames based on the shift amount.

### Effects of the Invention

According to the video signal processor of the present invention, it is possible to reduce the number of circuit parts that perform signal processing with high bit precision as small as possible. Consequently, it is possible to suppress an increase in circuit scale as small as possible and it is made possible to suppress the cost.

### Brief Description of the Drawings

Fig. 1 is a block diagram showing an embodiment of a video signal processor of the present invention.
Figs. 2(A) and (B) are diagrams each showing an example of a motion vector detection operation by a motion vector detection unit 2 in Fig. 1.
Fig. 3 is a diagram for explaining operations of data holding/selection units 311 and 312 and a shift amount conversion unit 313 in Fig. 1.
Fig. 4 is a diagram showing a relation between gradation level and display luminance of an input signal in an image display device.
Fig. 5 is a diagram showing characteristics of gamma correction performed on a video signal.
Fig. 6 is a diagram showing characteristics in which the relation between gradation level and output gradation is linear.
Fig. 7 is a diagram showing characteristics of inverse gamma correction performed in inverse gamma correction units 314 and 315 in Fig. 1.
Figs. 8(A) and (B) are diagrams for explaining working and effect by the inverse gamma correction units 314 and 315 and a gamma correction unit 319 in Fig. 1.
Fig. 9A is the first half of a block diagram showing another embodiment of the video signal processor of the present invention.
Fig. 9B is the second half of the block diagram shown in Fig. 9A.

### Embodiments of the Invention

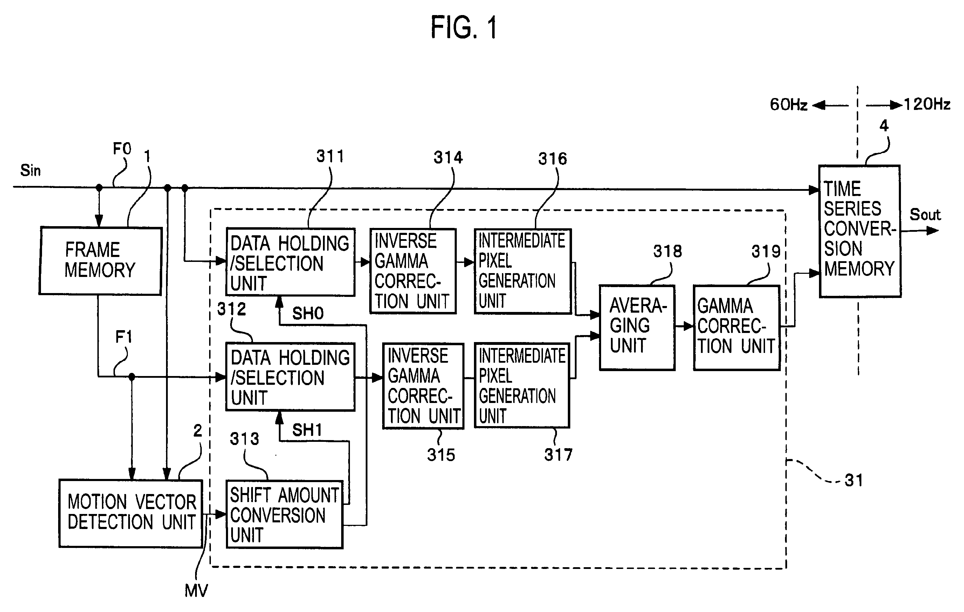

Hereinafter, a video signal processor of the present invention is explained with reference to the accompanying drawings. In Fig. 1, each piece of pixel data of a video signal Sin having a frame frequency of 60 Hz is input sequentially to a frame memory 1, a motion vector detection unit 2, an interpolation unit 31, and a time series conversion memory 4. The video signal Sin is subjected in advance to gamma correction as shown in Fig. 5. The frame memory 1 delays input pixel data by one frame and then outputs the data. The current frame of the input video signal Sin is denoted by F0 and the frame one frame ahead of the current frame output from the frame memory 1 is denoted by F1.

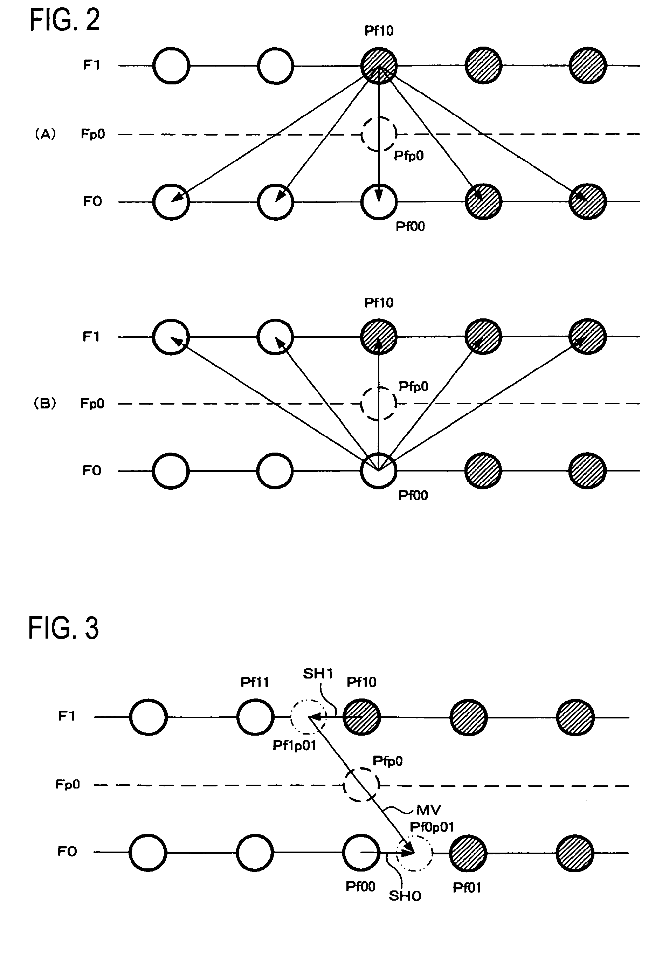

The motion vector detection unit 2 detects a motion vector to generate each piece of interpolation pixel data of an interpolation frame to be interpolated between the current frame F0 and the frame F1 using the pixel data of the current frame F0 and the frame F1 by, for example, a matching method. An example of the motion vector detection operation in the motion vector detection unit 2 is explained using Figs. 2(A) and 2(B). Figs. 2(A) and 2(B) show the motion vector detection operation to generate interpolation pixel data Pfp0 on an interpolation frame Fp0. Here, for the sake of simplification, pixel data on the same horizontal line is explained. Solid line white circles shown in Figs. 2(A) and 2(B) indicate white pixel data and hatched circles indicate black pixel data.

In Fig. 2(A), pixel data Pf10 on the frame F1 in the same horizontal position as that of the interpolation pixel data Pfp0 is taken as a reference. Then, differences between the pixel data Pf10 and pixel data Pf00 on the current frame F0 and between the pixel data Pf10 and a plurality of pieces of pixel data in a predetermined range located to the left and right of the pixel data Pf00 are found. The direction in which the difference is smallest is taken as the direction of the motion vector. On the other hand, Fig. 2(B) shows a case where the pixel data Pf00 on the frame F0 in the same horizontal position as that of the interpolation pixel data Pfp0 is taken as a reference. Differences between the pixel data Pf00 and the pixel data Pf10 on the frame F1 and between the pixel data Pf00 and a plurality of pieces of pixel data in a predetermined range located to the left and right of the pixel data Pf10 are found. The direction in which the difference is smallest is taken as the direction of the motion vector.

Here, only finding differences from pieces of pixel data in the horizontal direction is shown, but, in actuality, differences between the pixel data Pf10 or the pixel data Pf00, which is a reference, and a plurality of pieces of pixel data in a predetermined range in the horizontal direction and in the vertical direction are found and a motion vector in the horizontal direction and that in the vertical direction are detected. It may also be possible for the motion vector detection unit 2 to detect a motion vector by the detection method shown in Fig. 2(A) or to detect a motion vector by the detection method shown in Fig. 2(B). Further, it may also be possible to detect motion vectors by both the detection methods of Figs. 2(A) and 2(B) and to determine one of them as a final motion vector or to generate a final motion vector based on the two motion vectors detected by both the detection methods of Figs. 2(A) and 2(B). Furthermore, it may also be possible to detect a motion vector using a plurality of pieces of pixel data of three or more frames. The method for detecting a motion vector in the motion vector detection unit 2 is not limited to those explained above and arbitrary methods may be used.

The pixel data input to the motion vector detection unit 2 does not have such linear characteristics R0 as shown in Fig. 6, but has such nonlinear characteristics R2 as shown in Fig. 5 and the difference of signal level between a pair of pieces of pixel data does not necessarily agree with the difference of the actual luminance between the pair of pieces of pixel data. However, the relation of magnitude of the difference between a pair of pieces of pixel data is the same for both the characteristics R0 and the characteristics R2, and therefore, it is not necessary to perform inverse gamma correction on the pixel data input to the motion vector detection unit 2.

Returning to Fig. 1, a motion vector MV detected by the motion vector detection unit 2 is input to a shift amount conversion unit 313 within the interpolation unit 31. The interpolation unit 31 comprises data holding/selection units (pixel data selection units) 311 and 312, the shift amount conversion unit 313, inverse gamma correction units 314 and 315, intermediate pixel generation units 316 and 317, an averaging unit 318, and a gamma correction unit 319. The data holding/selection unit 311 holds a plurality of pieces of pixel data on the frame F0 necessary when generating the interpolation pixel data Pfp0 shown in Figs. 2(A) and 2(B). The data holding/selection unit 312 holds a plurality of pieces of pixel data on the frame F1 necessary when generating the interpolation pixel data Pfp0 shown in Figs. 2(A) and 2(B). The shift amount conversion unit 313 converts the motion vector MV supplied from the motion vector detection unit 2 into shift amounts SH0 and SH1 and supplies the shift amounts to the data holding/selection units 311 and 312.

Here, the shift amounts SH0 and SH1 generated in the shift amount conversion unit 313 are explained using Fig. 3. In Fig. 3, when the motion vector MV detected by the motion vector detection unit 2 is such a vector as shown schematically, the shift amount conversion unit 313 generates the shift amount SH1 to shift the pixel data Pf10 on the frame F1 in the leftward direction by an amount corresponding to 0.5 pixels and generates the shift amount SH0 to shift the pixel data Pf00 on the frame F0 in the rightward direction by an amount corresponding to 0.5 pixels. In the case of Fig. 3, in order to generate the interpolation pixel data Pfp0, virtual pixel data Pf1p01 indicated by an alternate long and two short dashes line on the frame F1 and virtual pixel data Pf0p01 indicated by an alternate long and two short dashes line on the frame F0 are averaged. However, the pixel data Pf1p01 and Pf0p01 does not exist actually. Hence, the interpolation pixel data Pf1p01 is generated using the pixel data Pf10 and pixel data Pf11 located to the left thereof and the interpolation pixel data Pf0p01 is generated using the pixel data Pf00 and pixel data Pf01 located to the right thereof

In Fig. 1, each of the data holding/selection units 311 and 312 selects and outputs one or two pieces of pixel data necessary to generate the interpolation pixel data Pfp0 according to the input shift amounts SH0 and SH1 of the plurality of pieces of pixel data that has been held. In the case of Fig. 3, the data holding/selection unit 311 selects and outputs the pixel data Pf10 and Pf11 and the data holding/selection unit 312 outputs the pixel data PF00 and Pf01. For example, when the motion vector MV is a vector going from the pixel data Pf11 to the pixel data Pf01, the data holding/selection units 311 and 312 respectively select and output the pixel data Pf11 and Pf01.

The pixel data output from the data holding/selection units 311 and 312 are input to the inverse gamma correction units 314 and 315. The inverse gamma correction units 314 and 315 perform inverse gamma correction of characteristics R1' as shown in Fig. 7 on the input pixel data having the characteristics R2 of Fig. 5. The characteristics R1' of Fig. 7 are the same as or similar to the characteristics R1 shown in Fig. 4 possessed by the image display device. This sameness or similarity gives the pixel data output from the inverse gamma correction units 314 and 315 the linear characteristics R0 as shown in Fig. 6. The pixel data output from the inverse gamma correction units 314 and 315 are input to the intermediate pixel generation units 316 and 317.

The intermediate pixel generation units 316 and 317 generate interpolation pixel data located between pieces of pixel data when generating the interpolation pixel data Pfp0 as in the case of Fig. 3. In the example of Fig. 3, the intermediate pixel generation unit 316 generates the interpolation pixel data Pf1p01 and the intermediate pixel generation unit 317 generates the interpolation pixel data Pf0p01. A pair of pieces of interpolation pixel data output from the intermediate pixel generation units 316 and 317 is input to the averaging unit 318. The averaging unit 318 generates the interpolation pixel data Pfp0 by averaging the input pair of pieces of interpolation pixel data. The averaging unit 318 is an interpolation pixel generation unit. In the example of Fig. 3, the averaging unit 318 generates the interpolation pixel data Pfp0 by averaging the interpolation pixel data Pf1p01 and Pf0p01.

In the present embodiment shown in Fig. 1, the intermediate pixel generation units 316 and 317 are necessary because a state where the shift amounts SH0 and SH1 are 0.5 pixels occurs. If the detection precision of the motion vector in the motion vector detection unit 2 is reduced so that the shift amounts SH0 and SH1 are in units of pixel, the intermediate pixel generation units 316 and 317 are no longer necessary. Consequently, it is sufficient to provide the intermediate pixel generation units 316 and 317 according to the necessity.

The interpolation pixel data Pfp0 output from the averaging unit 318 is input to the gamma correction unit 319. The gamma correction unit 319 performs gamma correction of the characteristics R2 shown in Fig. 5 on the input interpolation pixel data Pfp0 and outputs the resultant data. In this manner, the interpolation unit 31 performs inverse gamma correction of characteristics R1' on the pixel data of the video signal Sin having been subjected to gamma correction of the characteristics R2 so as to cause the pixel data to have the linear characteristics R0 temporarily and in this state, the interpolation unit 31 generates the interpolation pixel data Pfp0 and then returns the state to the original state by performing gamma correction of the characteristics R2.

To the time series conversion memory 4, the pixel data of the frame F0 and the interpolation pixel data Pfp0 output from the interpolation unit 31 are input sequentially. The time series conversion memory 4 generates image data of the frame F0, which is an actual frame, based on the pixel data of the frame F0 input sequentially and image data of the interpolation frame Fp0, which is an interpolation frame, based on the interpolation pixel data Pfp0 input sequentially. Then, the time series conversion memory 4 alternately outputs both pieces of image data at 120 Hz and outputs a video signal Sout having a frame frequency of 120 Hz.

In the present embodiment shown in Fig. 1, the parts that require high bit precision are only the intermediate pixel generation units 316 and 317 and the averaging unit 318. Consequently, the number of circuit parts that perform signal processing with high bit precision is reduced to a minimum, and therefore, it is possible to suppress an increase in circuit scale as small as possible and it is made possible to suppress the cost.

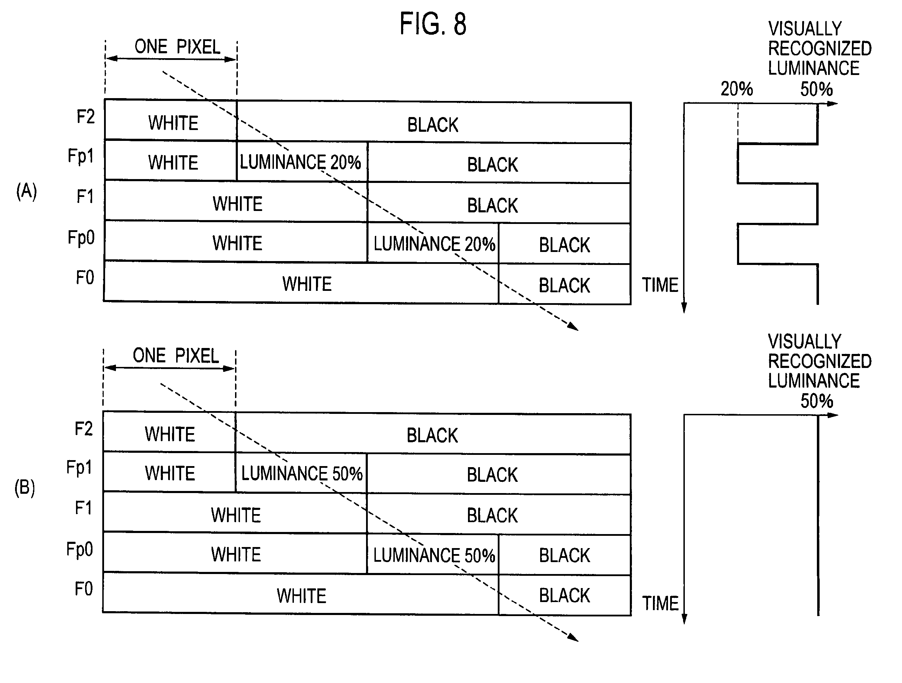

A visual difference on the screen between the case of the configuration of Fig. 1 in which the inverse gamma correction units 314 and 315 and the gamma correction unit 319 are provided (Fig. 8(B)) and the case of the configuration in which the inverse gamma correction units 314 and 315 and the gamma correction unit 319 are deleted (Fig. 8(A)) is explained using Figs. 8(A) and 8(B). In Figs. 8(A) and 8(B), F0, Fp0, and F1 are the same as those in Fig. 2 and Fig. 3 and F2 is an actual frame one frame past the frame F1 and Fp1 is an interpolation frame interpolated between the frames F1 and F2. It is assumed that the white pixel data has a luminance of 100%, the black pixel data has a luminance of 0%, and the line of sight moves in the direction of a dotted line arrow.

In the case of Fig. 8(A), when interpolation pixel data is generated by the white pixel data and the black pixel data, the luminance will be 50% according to calculation, but, the image display device has the characteristics as shown in Fig. 4, and therefore, the luminance that is actually displayed and visually recognized (visually recognized luminance) is 20%. In this case, the luminance is visually recognized as 50% when the line of sight is on the frames F2, F1, and F0 and the luminance is visually recognized as 20% when the line of sight is on the interpolation frames Fp1 and Fp0, and therefore, a flicker is recognized. On the other hand, in the case of Fig. 8(B), because of the presence of the gamma correction unit 319, the luminance of 50% according to calculation is the same as the visually recognized luminance of 50% that is actually displayed. In this case, the luminance is always visually recognized as 50% when the line of sight moves from the frame F2 to the frame F0, and therefore, no flicker is recognized.

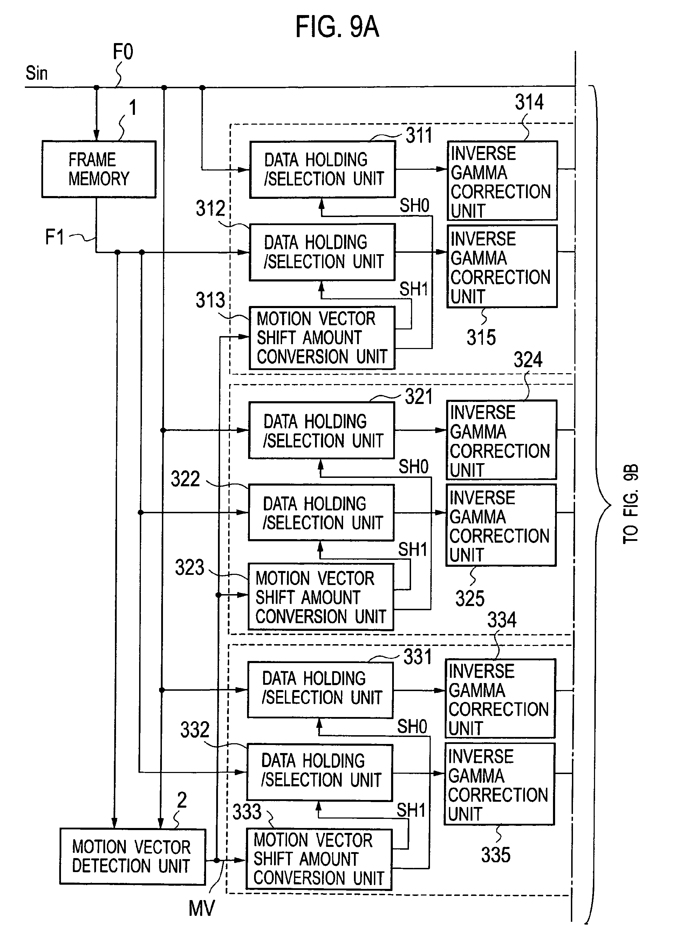

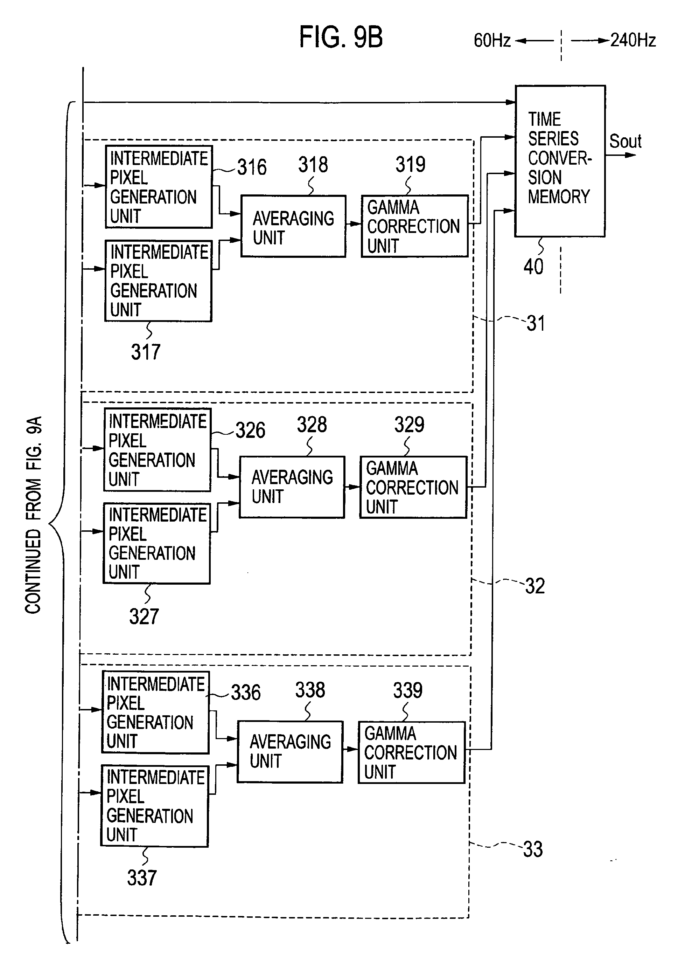

Fig. 9A and Fig. 9B show another embodiment in which the video signal Sin having a frame frequency of 60 Hz is converted into the video signal Sout having a frame frequency of 240 Hz and then output. The same reference numeral is attached to the same part as that in Fig. 1 and its explanation is omitted appropriately. In Fig. 9A and Fig. 9B, an interpolation unit 32 comprises data holding/selection units 321 and 322, a shift amount conversion unit 323, inverse gamma correction units 324 and 325, intermediate pixel generation units 326 and 327, an averaging unit 328, and a gamma correction unit 329. An interpolation unit 33 comprises data holding/selection units 331 and 332, a shift amount conversion unit 333, inverse gamma correction units 334 and 335, intermediate pixel generation units 336 and 337, an averaging unit 338, and a gamma correction unit 339.

A time series conversion memory 40 sequentially outputs three interpolation frames generated based on the image data of the frame F0 and the interpolation pixel data output from the interpolation units 31 to 33 at 240 Hz and outputs the video signal Sout having a frame frequency of 240 Hz. In another embodiment also, in which the frame rate is converted into a frame rate four times the original frame rate, the units that require high bit precision are only the intermediate pixel generation units 316, 317, 326, 327, 336, and 337, and the averaging units 318, 328, and 338. Consequently, the number of the circuit parts that perform signal processing with high bit precision is reduced to a minimum, and therefore, it is possible to suppress an increase in circuit scale as small as possible and it is made possible to suppress the cost.

The present invention is not limited to the above-explained embodiments and can be modified in a variety of ways in the scope not deviating from the gist of the present invention.

### Industrial Applicability

As explained above, according to the video signal processor of the present invention, it is possible to reduce the number of circuit parts that perform signal processing with high bit precision as small as possible. Consequently, it is possible to suppress an increase in circuit scale as small as possible and it is made possible to suppress the cost.

### Reference Signs List

- 1: frame memory
- 2: motion vector detection unit
- 4, 40: time series conversion memory
- 31, 32, 33: interpolation unit
- 311, 312, 321, 322, 331, 332: data holding/selection unit (pixel data selection unit)
- 313, 323, 333: shift amount conversion unit
- 314, 315, 324, 325, 334, 335: inverse gamma correction unit
- 316, 317, 326, 327, 336, 337: intermediate pixel generation unit
- 318,328,338: averaging unit (interpolation pixel generation unit)
- 319, 329, 339: gamma correction unit

## Claims

1. A video signal processor comprising:
a motion vector detection unit configured to detect a motion vector necessary when generating interpolation pixel data configuring an interpolation frame to be interpolated between a plurality of actual frames using pixel data within the plurality of actual frames in an input video signal;
a pixel data selection unit configured to select and output pixel data within the plurality of actual frames to generate the interpolation pixel data according to the motion vector;
an interpolation pixel generation unit configured to generate the interpolation pixel data using pixel data within the plurality of actual frames selected by the pixel data selection unit;
an inverse gamma correction unit arranged between the pixel data selection unit and the interpolation pixel generation unit and configured to perform inverse gamma correction to correct gamma characteristics given in advance to the input video signal on pixel data output from the pixel data selection unit; and
a gamma correction unit arranged in the subsequent stage of the interpolation pixel generation unit and configured to perform gamma correction on the interpolation pixel data output from the interpolation pixel generation unit.

2. The video signal processor according to claim 1, comprising an intermediate pixel generation unit configured to generate virtual interpolation pixel data located between two pixels neighboring on one line within an actual frame between the inverse gamma correction unit and the interpolation pixel generation unit, wherein
the interpolation pixel generation unit generates the interpolation pixel data using the virtual interpolation pixel data.

3. The video signal processor according to claim 1 or 2, comprising a shift amount conversion unit configured to convert the motion vector into shift amounts for pixel data in the same horizontal and vertical positions as those of the interpolation pixel data within the plurality of actual frames, wherein
the pixel data selection unit selects and outputs pixel data within the plurality of actual frames based on the shift amount.
